# EUROPÄISCHE PATENTANMELDUNG

(11) **EP 1 777 353 A2**
(43) Veröffentlichungstag der Anmeldung: **25.04.2007**
(21) Anmeldenummer: 06017115.4
(22) Anmeldetag: 17.08.2006
(51) Int. Cl.: E03F 1/00, E02B 11/00

(54) **Transporteinheit mit Systemelementen für einen Sicker- und Drainagekörper**

(30) Priorität: 24.10.2005 DE 202005016712 U
(71) Anmelder: Heitker GmbH, 49809 Lingen (Ems) (DE)
(72) Erfinder: Martin Heitker, 49809 Lingen (DE)
(74) Vertreter: Jabbusch, Matthias

(57) **Zusammenfassung**

Bei einer Transporteinheit mit mehrlagig gestapelten Systemelementen zum Zusammensetzen eines Sicker- und Drainagekörpers ist vorgesehen, daß die von den Systemelementen ausgebildete unterste Lage wenigstens vier Fußaufnahmen aufweist.

Mit dieser Transporteinheit kann auf den Einsatz von Paletten für den Transport der Systemelemente verzichtet werden.

## Beschreibung

Die Erfindung betrifft eine Transporteinheit mit mehrlagig gestapelten Systemelementen zum Zusammensetzen eines Sicker- und Drainagekörpers.

Derartige Systemelemente dienen der Schaffung von Speichervolumen bei der Entwässerung, insbesondere bei der Regenwasserbewirtschaftung zur Versickerung, Rückhaltung, Drainage oder Nutzung von Regenwasser. Die aus den Systemelementen zusammengesetzte Transporteinheit wird aufgrund ihrer voluminösen Abmessung üblicherweise mit einem Gabelstapler bewegt. Dazu ist es bekannt, daß die Transporteinheit eine Palette, insbesondere eine Euro-Palette oder Einwegpalette aufweist, auf der die im wesentlichen quaderförmig ausgebildeten Systemelemente, mehrlagig aufgestapelt und mit Umreifungsband zusammengezurrt, gelagert und transportiert werden. Kosten entstehen durch die Herstellung sowie durch die Handhabung bei Lieferung, Lagerung und Rücktransport bzw. durch die Entsorgung der Paletten.

Der Erfindung liegt die Aufgabe zugrunde, eine Transporteinheit der eingangs genannten Gattung aufzuzeigen, mit der auf den Einsatz von Paletten verzichtet werden kann.

Diese Aufgabe ist erfindungsgemäß durch eine Transporteinheit mit den Merkmalen des Schutzanspruches 1 gelöst. Vorteilhafte Weiterbildungen der Erfindung sind in den Unteransprüchen angegeben.

Die erfindungsgemäße Transporteinheit zeichnet sich dadurch aus, das die von den Systemelementen ausgebildete unterste Lage wenigstens vier Fußaufnahmen aufweist. Je nach Größe des Stapels kann die unterste Lage selbstverständlich auch mehr als vier Fußaufnahmen aufweisen. Die Fußaufnahmen sind an der Unterseite des von den Systemelementen ausgebildeten Stapels angeordnet, so daß der gesamte Stapel bedarfsweise auf Füße gestellt werden kann. Die Fußaufnahmen bieten somit die Möglichkeit, unter dem Stapel einen Freiraum zu schaffen, der das Unterfassen des Stapels mit einem Hebezeug, insbesondere mit einer Gabel eines Gabelstaplers erlaubt. Damit ist insgesamt eine Transporteinheit geschaffen, die auf den Einsatz von Paletten verzichtet und deshalb besonders kostengünstig verfrachtet, verladen, transportiert und gelagert werden kann.

Nach einer ersten Weiterbildung der Erfindung sind in den Fußaufnahmen wenigstens vier Füße angeordnet. Bei Ausbildung von mehr als vier Fußaufnahmen liegt sowohl die Möglichkeit, nicht in allen Fußaufnahmen Füße anzuordnen, als auch die Möglichkeit, in mehr als vier Fußaufnahmen Füße anzuordnen, im Rahmen der Erfindung.

Bezüglich der Verteilung der Fußaufnahmen auf die einzelnen, die unterste Lage ausbildenden Systemelemente, besteht eine nächste Weiterbildung darin, daß jedes Systemelement wenigstens zwei Fußaufnahmen aufweist. Weist jedes Systemelement nur zwei Fußaufnahmen auf, ergibt sich zwangsläufig, daß die unterste Lage aus wenigstens zwei Systemelementen bestehen muß. Besonders bevorzugt ist jedoch vorgesehen, daß jedes Systemelement vier Fußaufnahmen aufweist. Diese Ausbildung erlaubt bereits die Anordnung nur eines einzigen Systemelementes in der untersten Lage. Günstigerweise weist jeder Eckbereich des etwa quaderförmig ausgebildeten Systemelements eine Fußaufnahme auf, so daß unabhängig der Anzahl der die unterste Lage ausbildenden Systemelemente immer die Möglichkeit besteht, wenigstens die in den Eckbereichen der untersten Lage gelegenen Fußaufnahmen mit Füßen zu besetzen.

Nach einer besonders vorteilhaften Weiterbildung der Erfindung ist jedes Systemelement als ein seine Fußaufnahmen einstückig ausformendes Spritzgußteil ausgebildet. Eine denkbare Ausbildungsvariante besteht darin, in den Fußaufnahmen angeordnete Füße in das einstückige Spritzgußteil zu integrieren. Ein als Spritzgußteil ausgebildetes Systemelement ist besonders kostengünstig in großen Stückzahlen herstellbar. Um die Herstellungskosten noch weiter zu reduzieren, sind alle Systemelemente identisch ausgebildet. Damit weisen die Systemelemente sämtlicher Lagen Fußaufnahmen oder Fußaufnahmen einschließlich darin angeordneter Füße auf. Außerhalb der untersten Lage angeordnete Fußaufnahmen und/oder darin angeordnete Füße bleiben jedoch ungenutzt.

Nach einer alternativen Weiterbildung der Erfindung ist an jedem Systemelement wenigstens ein seine Fußaufnahmen aufweisendes Adapterteil angeordnet. Ein derartiges Adapterteil hat beispielsweise Rast-, Schnapp- oder Klemmelemente, mit denen es lösbar oder unlösbar an den Systemelementen festsetzbar ist. Vorzugsweise ist jedoch vorgesehen, daß lediglich den die unterste Lage ausbildenden Systemelementen Adapterteile zugeordnet sind, wobei jedes Adapterteil wenigstens eine Fußaufnahme aufweist. Auch das Adapterteil ist günstigerweise als ein seine Fußaufnahme einstückig ausformendes Spritzgußteil ausgebildet. In der Fußaufnahme des Adapterteiles kann ebenfalls bereits ein Fuß angeordnet sein, wobei auch hier grundsätzlich die Möglichkeit besteht, den Fuß als separates Bauteil auszubilden oder ihn in das einstückige, das Adapterteil ausbildende Spritzgußteil zu integrieren.

Nach einer besonders einfachen Weiterbildung der Erfindung ist vorgesehen, daß jede Fußaufnahme als mit einem Fuß zusammenwirkende Steckaufnahme ausgebildet ist. Die damit zwischen einer Fußaufnahme und einem Fuß herstellbare Steckverbindung ermöglicht eine reibschlüssige Aufnahme des Fußes, so daß dieser beim Anheben der erfindungsgemäßen Transporteinheit nicht aus der Fußaufnahme herausfallen kann. Der Reibschluß ist vorzugsweise derart eingestellt, daß die Bestückung der Fußaufnahmen mit Füßen bequem und einfach von Hand erfolgen kann.

Jeder Fuß ist vorzugsweise als Rohrabschnitt ausgebildet, dessen Abschnittslänge der Fußhöhe entspricht. Als Rohrfüße ausgebildete Füße haben den Vorteil, daß sie ein geringes Gewicht aufweisen und, daß das manuelle Hineinstecken der Füße in die Steckaufnahme hinein sowie das manuelle Herausziehen der Füße aus der Steckaufnahme heraus durch eine von Hand auszuführende Drehbewegung maßgeblich vereinfacht werden kann.

Eine weitere Reduzierung der Frachtkosten ist dadurch erreicht, daß die Füße als kostengünstig herzustellende Einwegartikel ausgebildet sind. Dazu ist es von Vorteil, die Füße aus einem Kunststoff herzustellen, der in bereits bestehenden Verwertungssystemen, wie beispielsweise dem des "Grünen Punktes", recycelt werden können. Grundsätzlich besteht jedoch ebenfalls die Möglichkeit, die Füße zu sammeln und für ihre erfindungsgemäße Verwendung erneut zu Verfügung zu stellen.

Um eine maximale Kompatibilität der erfindungsgemäßen Transporteinheit mit gängigen Fracht-, Verlade-, Transport- und/oder Lagersystemen zu gewährleisten, weisen die Füße eine etwa der freien Höhe von Euro-Paletten entsprechende Fußhöhe auf. Bei einer Ausbildung der Füße aus Rohrabschnitten können jedoch problemlos auch andere Fußhöhen hergestellt werden, ohne daß dabei nennenswerte Mehrkosten entstehen.

Eigenständiger Schutz wird für ein Systemelement zur Verwendung in der erfindungsgemäßen Transporteinheit beansprucht. Dieses Systemelement zeichnet sich gemäß Anspruch 11 dadurch aus, daß es wenigstens eine Fußaufnahme aufweist.

Außerdem wird noch eigenständiger Schutz für eine Fußaufnahme sowie für einen Fuß beansprucht, wobei an der Fußaufnahme bzw. am Fuß mit den Systemelementen korrespondierende Schnellverbindungsmittel angeformt sind.

Ein Ausführungsbeispiel der Erfindung, aus dem sich weitere erfinderische Merkmale ergeben, ist in der Zeichnung dargestellt. Es zeigen:
- Fig. 1:: Eine perspektivische Ansicht einer erfindungsgemäßen Transporteinheit; und
- Fig. 2:: eine perspektivische Ansicht eines Systemelementes für die Transporteinheit gemäß Fig. 1.

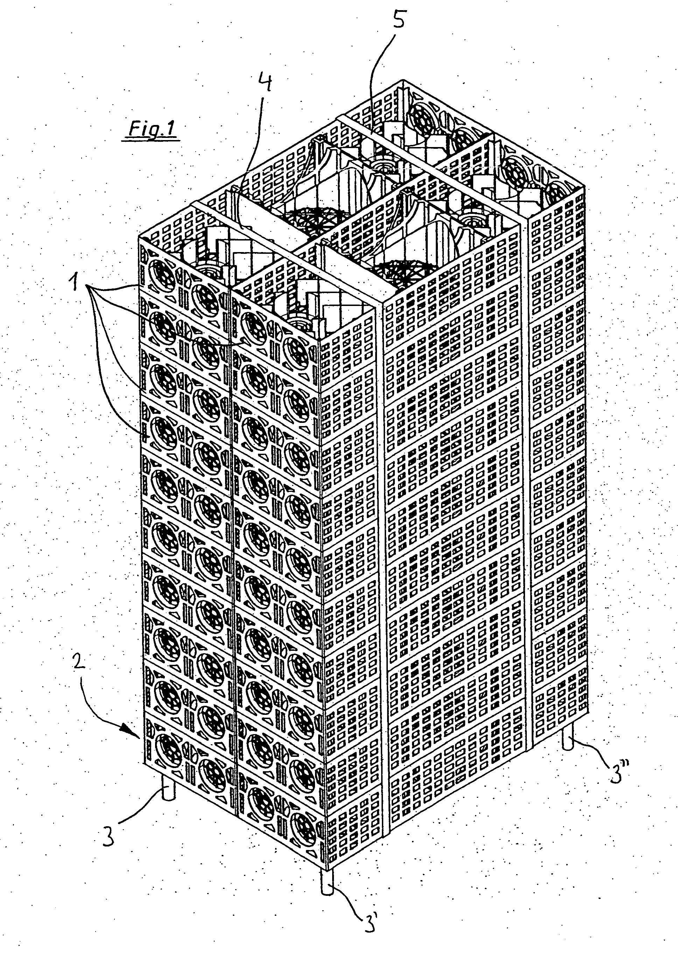

Die Figur 1 zeigt eine erfindungsgemäße Transporteinheit mit mehrlagig gestapelten, identisch ausgebildeten Systemelementen 1, die zum Zusammensetzen eines Sicker- und Drainagekörpers bereitgehalten werden. Die von den Systemelementen 1 ausgebildete unterste Lage 2 weist Fußaufnahmen auf, in denen Füße 3, 3', 3" angeordnet sind. Diese sind jeweils als kostengünstig herzustellende Einwegartikel in Form eines Rohrabschnittes ausgebildet, dessen Abschnittslänge der Fußhöhe entspricht. Die zehn-lagig gestapelten Systemelemente 1 sind mittels zwei Umreifungsbändern 4, 5 zusammengehalten.

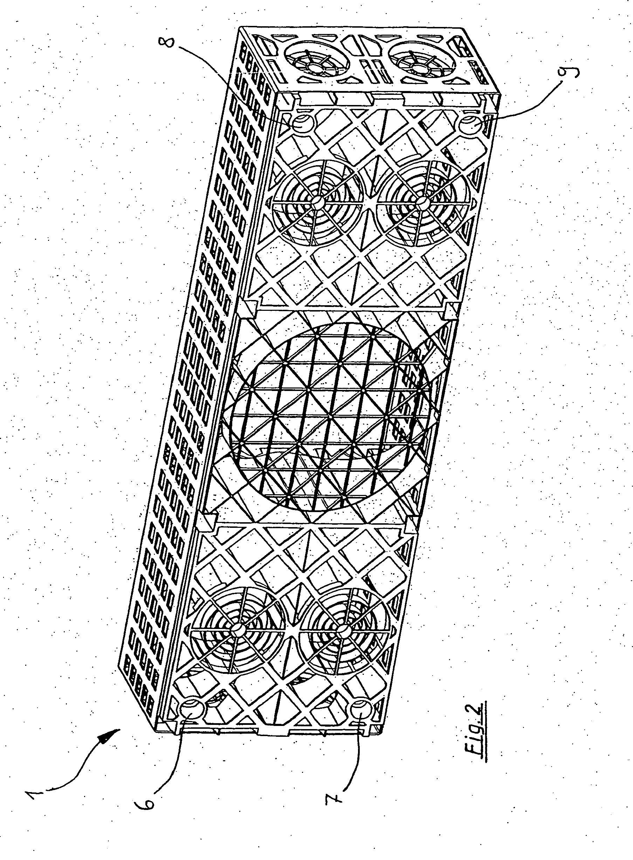

Die Figur 2 zeigt eine vergrößerte Ansicht eines der Systemelemente 1 der in Figur 1 dargestellten Transporteinheit. Diese Ansicht verdeutlicht, daß jedes Systemelement 1 vier Fußaufnahmen 6, 7, 8, 9 aufweist, die jeweils als Steckaufnahme für einen Fuß gemäß Figur 1 ausgebildet sind. Das Systemelement 1 ist als ein seine Fußaufnahmen 6, 7, 8, 9 einstückig ausformendes Spritzgußteil ausgebildet.

## Patentansprüche

1. Transporteinheit mit mehrlagig gestapelten Systemelementen zum Zusammensetzen eines Sicker- und Drainagekörpers,
**dadurch gekennzeichnet,**
**daß** die von den Systemelementen (1) ausgebildete unterste Lage (2) wenigstens vier Fußaufnahmen (6, 7, 8, 9) aufweist.

2. Transporteinheit nach Anspruch 1, **dadurch gekennzeichnet, daß** in den Fußaufnahmen (6, 7, 8, 9) wenigstens vier Füße (3, 3', 3") angeordnet sind.

3. Transporteinheit nach einem der Ansprüche 1 und 2, **dadurch gekennzeichnet, daß** jedes Systemelement (1) wenigstens zwei Fußaufnahmen (6, 7, 8, 9) aufweist.

4. Transporteinheit nach einem der Ansprüche 1 und 2, **dadurch gekennzeichnet, daß** jedes Systemelement (1) vier Fußaufnahmen (6, 7, 8, 9) aufweist.

5. Transporteinheit nach einem der Ansprüche 1 bis 4, **dadurch gekennzeichnet, daß** jedes Systemelement (1) als ein seine Fußaufnahmen (6, 7, 8, 9) einstückig ausformendes Spritzgußteil ausgebildet ist.

6. Transporteinheit nach einem der Ansprüche 1 bis 4, **dadurch gekennzeichnet, daß** an jedem Systemelement (1) wenigstens ein seine Fußaufnahmen (6, 7, 8, 9) aufweisendes Adapterteil angeordnet ist.

7. Transporteinheit nach einem der Ansprüche 1 bis 6, **dadurch gekennzeichnet, daß** jede Fußaufnahme (6, 7, 8, 9) als mit einem Fuß (3, 3', 3") zusammenwirkende Steckaufnahme ausgebildet ist.

8. Transporteinheit nach einem der Ansprüche 2 bis 7, **dadurch gekennzeichnet, daß** jeder Fuß (3, 3', 3") ein Rohrabschnitt ist, dessen Abschnittslänge der Fußhöhe entspricht.

9. Transporteinheit nach einem der Ansprüche 2 bis 8, **dadurch gekennzeichnet, daß** die Füße (3, 3', 3") als kostengünstig herzustellende Einwegartikel ausgebildet sind.

10. Transporteinheit nach einem der Ansprüche 2 bis 9, **dadurch gekennzeichnet, daß** die Füße (3, 3', 3") eine etwa der freien Höhe von Europaletten entsprechende Fußhöhe aufweisen.

11. Systemelement zur Verwendung in einer Transporteinheit gemäß einem der vorhergehenden Ansprüche, **gekennzeichnet durch** wenigstens eine Fußaufnahme (6, 7, 8, 9).

12. Fußaufnahme zur Verwendung an einer Transporteinheit gemäß einem der vorhergehenden Ansprüche, **gekennzeichnet durch** mit den Systemelementen korrespondierende Schnellverbindungsmittel.

13. Fuß zur Verwendung an einer Transporteinheit gemäß einem der vorhergehenden Ansprüche, **gekennzeichnet durch** mit den Systemelementen korrespondierende Schnellverbindungsmittel.
